**Europäisches Patentamt**

**European Patent Office**

**Office européen des brevets**

(19)

(11) Numéro de publication : **0 394 123 B1**

(12) **FASCICULE DE BREVET EUROPEEN**

(45) Date de publication du fascicule du brevet :
**30.12.92 Bulletin 92/53**

(51) Int. Cl.⁵ : **B60J 1/20**

(21) Numéro de dépôt : **90401042.8**

(22) Date de dépôt : **18.04.90**

(54) **Store enrouleur notamment pour lunette arrière de véhicule et procédé de fabrication.**

(30) Priorité : **19.04.89 FR 8905204**

(43) Date de publication de la demande :
**24.10.90 Bulletin 90/43**

(45) Mention de la délivrance du brevet :
**30.12.92 Bulletin 92/53**

(84) Etats contractants désignés :
**BE CH DE ES GB IT LI LU NL**

(56) Documents cités :
**FR-A- 1 381 059**
**GB-A- 2 118 115**

(73) Titulaire : **Etablissements FARNIER ET PENIN**
**Zone Industrielle No. 2 Route de Poitiers**
**F-79300 Bressuire (FR)**

(72) Inventeur : **Jeuffray, Jean-Marie**
**1 rue des Coulies**
**Terves, F-79300 Bressuire (FR)**
Inventeur : **Ouvrard, Gaston**
**18 rue de Bellefeuille**
**F-79300 Bressuire (FR)**

(74) Mandataire : **Fruchard, Guy et al**
**CABINET BOETTCHER 23, rue la Boétie**
**F-75008 Paris (FR)**

## Description

La présente invention concerne un store à enrouleur et plus particulièrement un store de lunette arrière de véhicule automobile.

On sait qu'avec l'augmentation toujours croissante des surfaces vitrées sur les véhicules automobiles et l'inclinaison de ces surfaces vitrées pour obtenir un aérodynamisme satisfaisant du véhicule, il devient de plus en plus nécessaire de prévoir au voisinage de la lunette arrière des stores destinés à protéger la nuque des passagers arrière contre les rayons du soleil. Les stores utilisés à cet effet sont des stores à enrouleur comportant un boîtier, généralement fixé à la plage arrière du véhicule, ayant une fente de guidage à travers laquelle s'étend une bande de tissu souple ayant une extrémité fixée à un organe d'enroulement rectiligne disposé à l'intérieur du boîtier, et une extrémité s'étendant à l'extérieur du boîtier et fixée à une barre de tirage également rectiligne venant obturer la fente de guidage dans une position rétractée du store.

Par ailleurs, afin d'augmenter l'aérodynamisme des véhicules, les constructeurs ont maintenant tendance à prévoir des surfaces vitrées galbées. Les stores connus actuellement, qui se déroulent selon une surface plane, sont mal adaptés aux vitres galbées. En effet, d'une part les stores ne peuvent pas être plaqués contre la vitre en raison de la différence de courbure entre la vitre qui est galbée et le store qui est plan, et d'autre part, la barre de tirage ne peut épouser la forme du bord supérieur de la vitre de sorte qu'il existe, même en position tirée du store, des interstices à travers lesquels le soleil peut passer, et gêner les passagers arrière du véhicule.

On a, certes, envisagé de cintrer la barre de tirage pour qu'elle épouse la forme du bord supérieur de la vitre à recouvrir. Toutefois, la courbe du bord supérieur de la vitre est une forme complexe présentant à la fois une courbure dans le plan de la vitre et une courbure dans un plan incliné par rapport au plan de la vitre. Par ailleurs, la fente de guidage dans le boîtier est généralement réalisée dans un plan de sorte qu'il est considéré qu'une barre de tirage qui épouserait la forme du bord supérieur de la vitre, ne coïnciderait pas avec la fente de guidage pour une position rétractée du store. Ceci est considéré comme un inconvénient majeur, la barre de tirage devant pouvoir s'encastrer dans la fente de guidage en position rétractée du store afin que le store enroulé soit entièrement contenu dans le boîtier afin d'être protégé.

Un but de la présente invention est de proposer un store à enrouleur s'adaptant au moins partiellement à des vitres galbées et qui soit entièrement contenu dans le boîtier en position rétractée.

En vue de la réalisation de ce but, on propose, selon l'invention, un store à enrouleur pour véhicule automobile comportant un boîtier ayant une fente de guidage à travers laquelle s'étend une bande de tissu souple ayant une extrémité fixée à un organe d'enroulement rectiligne disposé à l'intérieur du boîtier et une extrémité s'étendant à l'extérieur du boîtier et fixée à une barre de tirage munie de moyens d'accrochage, tel que divulgué par exemple dans le document FR-A-1.381.059, caractérisé en ce que la fente de guidage et la barre de tirage présentent des galbes sensiblement identiques et en ce que les moyens d'accrochage sont fixés à la barre de tirage selon un angle par rapport au tissu de manière à permettre à la barre de tirage, dans sa position accrochée, de présenter une flèche dans deux plans différents et d'épouser ainsi avec une bonne approximation le bord supérieur d'une vitre présentant des courbures dans deux plans différents. Ainsi, la partie de tissu souple qui correspond à la flèche de la barre de tirage se trouve entièrement contenue à l'intérieur du boîtier pour une position rétractée et est donc convenablement protégée, la barre de tirage étant encastrée dans la fente de guidage. De plus, on a constaté que même dans le cas d'une fente de guidage et d'une barre de tirage cintrées dans un plan, il était possible en position déployée de disposer la barre de tirage de façon qu'elle présente une flèche dans deux plans différents en inclinant simplement les moyens d'accrochage afin que la barre de tirage prenne une position oblique.

Selon un mode de réalisation avantageux de l'invention, le tissu souple comporte à son extrémité fixée à la barre de tirage une découpe galbée ayant une flèche sensiblement égale à la flèche de la barre de tirage, et fixée à un jonc lui-même engagé dans une barre de tirage tubulaire rigide. Ainsi on obtient un montage particulièrement propre et net du tissu souple dans la barre de tirage.

Selon un autre aspect de l'invention en liaison avec ce mode de réalisation de l'invention, on prévoit de mettre en oeuvre un procédé de fixation du tissu à la barre de tirage comportant les étapes de réaliser à une extrémité du tissu une découpe comportant un bord galbé ayant une flèche sensiblement égale à la flèche de la barre de tirage, disposer un jonc flexible dans une forme afin qu'il présente un galbe ayant une flèche sensiblement égale à la flèche de la barre de tirage, fixer le tissu au jonc flexible tangentiellement à celui-ci le long du bord galbé de la découpe du tissu, et engager le jonc flexible et l'extrémité du tissu qui y est fixée dans une barre de tirage tubulaire rigide galbée présentant une ouverture latérale à travers laquelle s'étend le tissu.

Selon un autre mode de réalisation avantageux de l'invention, le tissu souple comporte à son extrémité fixée à la barre de tirage un ourlet ayant un bord rectiligne et un pli galbé ayant une flèche sensiblement égale à la flèche à la barre de tirage, et un jonc est disposé à l'intérieur de l'ourlet, le jonc et le pli de l'ourlet étant engagés dans la barre de tirage.

Selon encore un autre aspect de l'invention associé à ce mode de réalisation, on prévoit un procédé de fixation du tissu à la barre de tirage comprenant les étapes de réaliser à une extrémité du tissu une découpe comportant un bord galbé ayant une flèche sensiblement double de la flèche de la barre de tirage, replier le tissu sur lui-même au moyen d'un organe de formage comportant un bord galbé ayant une flèche sensiblement égale à la flèche de la barre de tirage, fixer entre elles deux épaisseurs de tissu en regard au voisinage du bord de la découpe, engager un jonc dans l'ourlet et engager l'ourlet et le jonc dans une barre de tirage tubulaire rigide, galbée, présentant une fente latérale à travers laquelle s'étend le tissu. On a pu constater que ce procédé était particulièrement avantageux, car lors du pliage du tissu au moyen de la forme comportant un bord galbé, le tissu se déforme et son bord reprend une configuration rectiligne, de sorte que la fixation des deux épaisseurs de tissu en regard pour former l'ourlet est faite selon une ligne droite particulièrement aisée à réaliser.

D'autres caractéristiques et avantages de l'invention apparaîtront encore à la lecture de la description qui suit de deux modes de réalisation particuliers, non limitatifs de l'invention, en liaison avec les dessins ci-joints, parmi lesquels :

- la figure 1 est une vue en perspective partiellement en coupe d'un store à enrouleur selon l'invention,
- la figure 2 est une vue en perspective partielle illustrant le procédé de fixation selon un premier mode de réalisation de l'invention,
- la figure 3 est une vue en coupe selon la ligne A-A de la figure 1 du premier mode de réalisation de l'invention,
- la figure 4 et la figure 5 sont des vues en perspective schématiques illustrant un second procédé de réalisation de l'invention.
- la figure 6 est une vue en coupe selon la ligne A-A de la figure 1 du second mode de réalisation de l'invention.

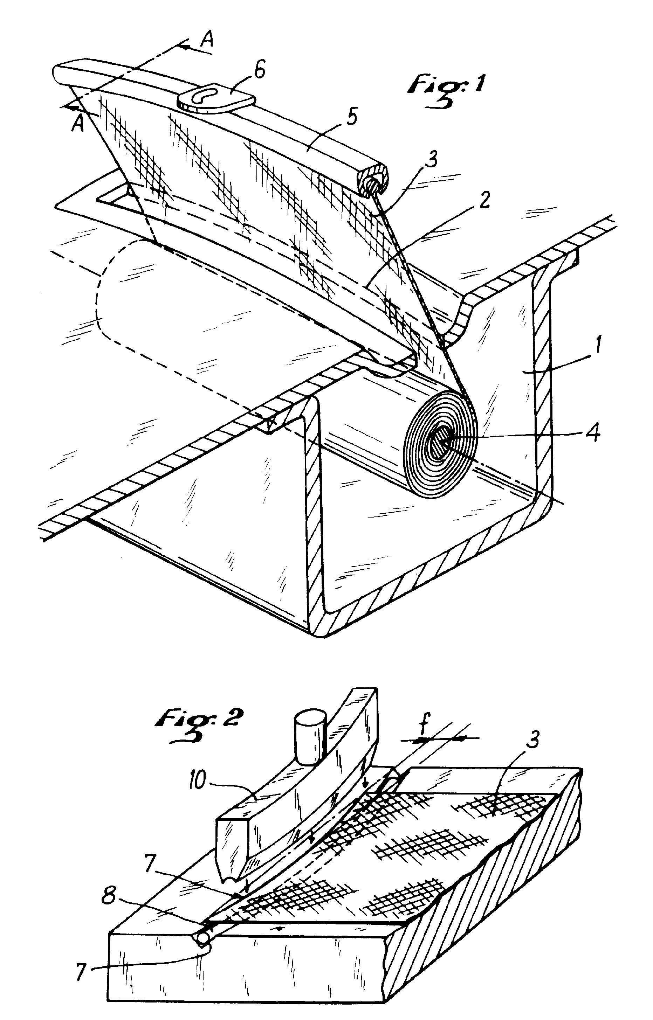

En référence à la figure 1, le store à enrouleur selon l'invention comporte de façon classique un boîtier 1 ayant une fente de guidage 2 à travers laquelle s'étend une bande de tissu souple 3 ayant une extrémité fixée à un organe d'enroulement rectiligne 4 disposé à l'intérieur du boîtier 1 et une extrémité s'étendant à l'extérieur du boîtier et fixée à une barre de tirage 5 équipée de moyens d'accrochage 6.

Selon l'invention, la fente de guidage 2 et la barre de tirage 5 sont galbées, la flèche de la fente de guidage 2 étant identique à la flèche de la barre de tirage 5. Dans le mode de réalisation illustré, la fente de guidage 2 est contenue dans un plan et la barre de tirage 5 est également recourbée selon une seule direction. On remarquera que la barre de tirage peut néanmoins épouser avec une bonne approximation le bord supérieur d'une vitre présentant des courbures dans deux plans différents en disposant les moyens d'accrochage 6 selon un angle par rapport au tissu 3 auquel la barre de tirage est fixée afin que, une fois accrochée, la barre de tirage soit dans une position d'équilibre inclinée par rapport au tissu 3 et présente donc une flèche tant selon un plan horizontal que selon un plan vertical.

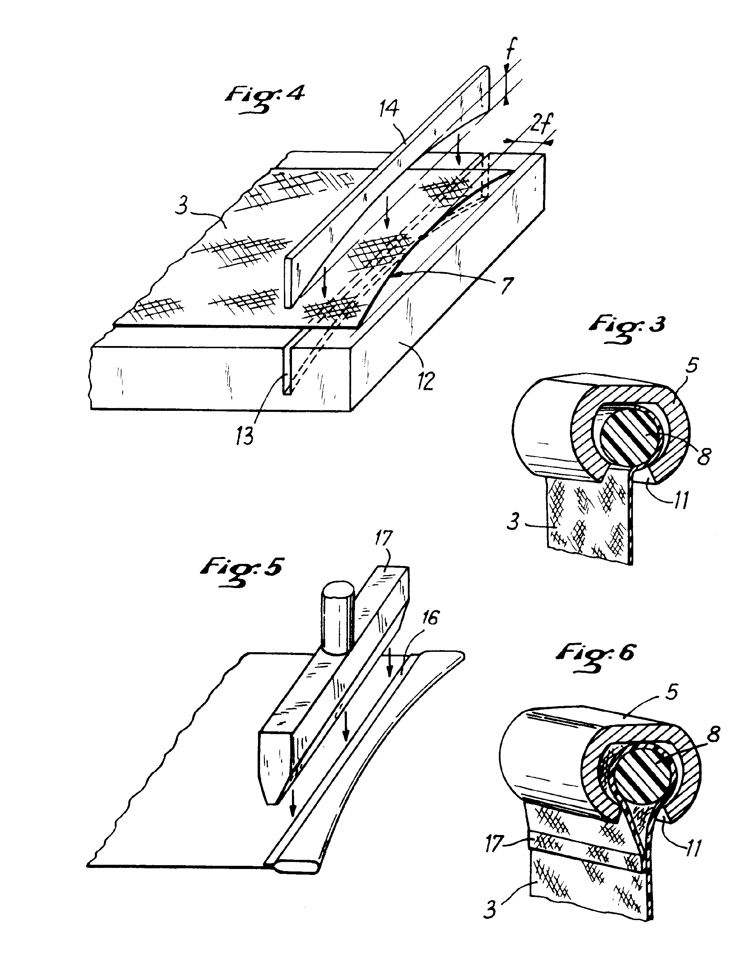

Les figures 2 et 3 illustrent un premier mode de réalisation de la fixation du tissu 3 à la barre de tirage 5. Dans ce premier mode de réalisation, le tissu 3 est tout d'abord découpé à une extrémité selon une découpe 7 présentant une courbure ayant une flèche f égale à la flèche de la courbure de la barre de tirage 5. Par ailleurs, un jonc souple 8 est disposé dans une forme, ici une gorge en V présentant également un galbe ayant une flèche f, de sorte que le jonc 8 a une forme identique à la découpe 7 du tissu 3. Le bord du tissu 3 comportant la découpe 7 est alors fixé au jonc souple 8. Dans le cas où le tissu est un tissu en fibre de verre recouvert de polyvinyle chloride, le jonc souple 8 est de préférence également en polyvinyle chloride et le tissu 3 est alors fixé au jonc 8 par soudage aux ultrasons au moyen d'une électrode 10 présentant un bord inférieur curviligne ayant une flèche égale à la flèche du bord extrême du tissu 3. Le tissu est ainsi fixé au jonc flexible tangentiellement à celui-ci le long du bord galbé de la découpe du tissu. une fois le tissu 3 fixé au jonc souple 8, l'ensemble est engagé longitudinalement dans une barre de tirage tubulaire rigide 5 présentant une ouverture latérale 11 à travers laquelle s'étend le tissu 3. Lors de l'introduction dans la barre de tirage 5, le jonc 8 s'oriente automatiquement pour épouser le galbe de la barre de tirage.

Les figures 4 à 6 illustrent un second mode de réalisation de l'invention. Dans ce mode de réalisation, le tissu 3 est tout d'abord découpé à l'une de ses extrémités selon une découpe 7 présentant cette fois une flèche 2f double de la flèche f de la barre de tirage 5 et de la fente de guidage 2. L'extrémité du tissu comportant la découpe 7 est ensuite disposée sur une ourleuse 12 comportant une fente 13 et le tissu est replié sur lui-même au moyen d'un organe de formage 14 comportant un bord galbé 15 ayant une flèche f égale à la flèche de la barre de tirage 5. Dans cette opération, le bord extrême du tissu se déforme et, après pliage, le bord extrême se présente sous une forme rectiligne de sorte que les deux épaisseurs de tissu en regard peuvent aisément être fixées l'une à l'autre au voisinage du bord de la découpe de façon rectiligne, par exemple en réalisant une soudure rectiligne 16 au moyen d'une électrode de soudage à ultrasons 17 ayant un bord inférieur rectiligne. Un jonc flexible 8 est ensuite engagé dans l'ourlet et l'ourlet équipé de son jonc flexible sont engagés dans une barre de tirage tubulaire rigide 5 galbée présentant une ouverture latérale 11 à travers laquelle s'étend le tissu.

Bien entendu l'invention n'est pas limitée aux modes de réalisation décrits et on peut y apporter des variantes de réalisation sans sortir du cadre de l'invention. En particulier, bien que l'invention ait été décrite en liaison avec un boîtier présentant une fente de guidage 2 formée dans un plan, on peut, sans sortir du cadre de l'invention, réaliser un enrouleur comportant une paroi supérieure conformée selon une surface curviligne dans laquelle est également réalisée une fente de guidage curviligne, la barre de tirage ayant alors une forme curviligne présentant une flèche selon deux plans différents.

Bien que l'invention ait été décrite en utilisant un jonc 8 flexible, on peut également utiliser un jonc rigide ayant un galbe présentant une flèche égale à celle de la barre de tirage.

## Revendications

1. Store à enrouleur pour véhicule automobile comportant un boîtier (1) ayant une fente de guidage (2) à travers laquelle s'étend une bande de tissu souple (3) ayant une extrémité fixée à un organe d'enroulement rectiligne (4) disposé à l'intérieur du boîtier et une extrémité s'étendant à l'extérieur du boîtier et fixée à une barre de tirage (5) munie de moyens d'accrochage caractérisé en ce que la fente de guidage (2) et la barre de tirage (5) présentent des galbes sensiblement identiques et en ce que les moyens d'accrochage (6) sont fixés à la barre de tirage selon un angle par rapport au tissu (3) de manière à permettre à la barre (5) dans sa position accrochée, de présenter une flèche dans deux plans différents et d'épouser ainsi avec une bonne approximation le bord supérieur d'une vitre présentant des courbures dans deux plans différents.

2. Store à enrouleur selon la revendication 1, caractérisé en ce qu'à son extrémité fixée à la barre de tirage (5) le tissu souple (3) comporte une découpe galbée (7) ayant une flèche sensiblement égale à la flèche de la barre de tirage et est fixé à un jonc (8) lui-même engagé dans une barre de tirage tubulaire.

3. Procédé de fixation d'un tissu à une barre de tirage pour réaliser un store à enrouleur selon la revendication 2 caractérisé en ce qu'il comporte des étapes de réaliser à une extrémité du tissu une découpe (7) comportant un bord galbé ayant une flèche sensiblement égale à la flèche de la barre de tirage, disposer un jonc flexible (8) dans une forme afin qu'il présente un galbe ayant une flèche sensiblement égale à la flèche de la barre de tirage, fixer le tissu au jonc flexible tangentiellement à celui-ci le long du bord galbé de la découpe du tissu, et engager le jonc flexible et l'extrémité du tissu qui lui est fixé dans une barre de tirage tubulaire rigide galbée (5) présentant une ouverture latérale (11) à travers laquelle s'étend le tissu.

4. Procédé de fixation selon la revendication 3, caractérisé en ce que le jonc flexible et le tissu sont réalisés en polyvinyle chloride et en ce que le tissu est fixé au jonc par soudage à ultrasons.

5. Store à enrouleur selon la revendication 1, caractérisé en ce qu'à son extrémité fixée à la barre de tirage le tissu comporte un ourlet ayant un bord rectiligne et un pli galbé ayant une flèche sensiblement égale à la flèche de la barre de tirage, et en ce qu'un jonc (8) est disposé à l'intérieur de l'ourlet, le jonc et le pli de l'ourlet étant engagés dans la barre de tirage (5).

6. Procédé de fixation d'un tissu à une barre de tirage pour réaliser un store enrouleur selon la revendication 5, caractérisé en ce qu'il comporte les étapes de réaliser à une extrémité du tissu une découpe (7) comportant un bord galbé ayant une flèche sensiblement double de la flèche de la barre de tirage, replier le tissu sur lui-même au moyen d'un organe de formage (14) comportant un bord galbé (15) ayant une flèche sensiblement égale à la flèche de la barre de tirage, fixer entre elles deux épaisseurs de tissu en regard au voisinage du bord de la découpe, engager un jonc (8) dans l'ourlet et engager l'ourlet et le jonc dans une barre de tirage tubulaire rigide galbée (5) présentant une fente latérale à travers laquelle s'étend le tissu.

## Patentansprüche

1. Abdeckrollo für ein Kraftfahrzeug, umfassend ein Gehäuse (1) mit einem Führungsspalt (2), durch den hindurch sich ein biegsames Stoffband (3) erstreckt, dessen eines Ende an einem innerhalb des Gehäuses angeordneten geradlinigen Aufrollorgan (4) befestigt ist und dessen anderes Ende sich aus dem Gehäuse heraus erstreckt und an einer Zugstange (5) befestigt ist, die mit Mitteln zum Einhängen versehen ist, dadurch gekennzeichnet, daß der Führungsspalt (2) und die Zugstange (5) im wesentlichen identische Konturen haben und daß die Einhängemittel (6) an der Zugstange unter einem Winkel relativ zum Stoff (3) derart befestigt sind, daß sich die Stange (5) in ihrer angehängten Stellung in zwei verschiedenen Ebenen durchbiegen und sich so mit guter Annäherung an den oberen Rand einer Scheibe anpassen kann, die Krümmungen in zwei verschiedenen Ebenen hat.

2. Abdeckrollo nach Anspruch 1, dadurch gekennzeichnet, daß der biegsame Stoff (3) an seinem an der Zugstange (5) befestigten Ende einen gekrümmten Randabschnitt (7) hat, dessen Krümmung im wesentlichen gleich der Durchbiegung der Zugstange ist und der an einem Stab (8) befestigt ist, welcher seinerseits in einer rohrförmigen Zugstange angeordnet ist.

3. Verfahren zum Befestigen eines Stoffes an einer Zugstange zur Herstellung eines Abdeckrollos gemäß Anspruch 2, dadurch gekennzeichnet, daß es folgende Schritte umfaßt:

Herstellen eines Schnittrandes (7) an einem Ende des Stoffes mit einer gekrümmten Kante, deren Krümmung im wesentlichen gleich der Durchbiegung der Zugstange ist,

Anordnen eines flexiblen Stabes (8) in einer Form, so daß er eine Kontur mit einer Krümmung hat, die im wesentlichen gleich der Durchbiegung der Zugstange ist,

Befestigen des Stoffes an dem flexiblen Stab tangential zu demselben entlang der gekrümmten Kante des Stoffschnittrandes und

Einführen des flexiblen Stabes und des an ihm befestigten Stoffendes in eine gebogene rohrförmige starre Zugstange (5), die eine seitliche Öffnung (11) hat, durch welche hindurch sich der Stoff erstreckt.

4. Verfahren nach Anspruch 3, dadurch gekennzeichnet, daß der flexible Stab und der Stoff aus Polyvinylchlorid hergestellt sind und daß der Stoff an dem Stab duch Ultraschallschweißen befestigt wird.

5. Abdeckrollo nach Anspruch 1, dadurch gekennzeichnet, daß der Stoff an seinem an der Zugstange befestigten Ende einen Saum mit einem geradlinigen Rand und einem gebogenen Umschlagteil hat, dessen Krümmung im wesentlichen gleich der Durchbiegung der Zugstange ist, und daß ein Stab (8) innerhalb des Saumes angeordnet ist, wobei der Stab und das Umschlagteil des Saumes in die Zugstange (5) eingreifen.

6. Verfahren zum Befestigen eines Stoffes an einer Zugstange zur Realisierung eines Abdeckrollos gemäß Anspruch 5, dadurch gekennzeichnet, daß es die folgenden Schritte umfaßt:

Herstellen eines Endes des Stoffes mit einem Schnittrand (7) mit einer gekrümmten Kante, deren Krümmung im wesentlichen doppelt so stark wie die Krümmung der Zugstange ist,

Umschlagen des Stoffes mittels eines Formorganes (14), das einen gekrümmten Rand (15) hat, dessen Krümmung im wesentlichen gleich der Krümmung der Zugstange ist,

Befestigen der beiden Lagen des Stoffes nahe der Kante des Schnittrandes,

Einschieben eines Stabes (8) in den Saum und

Einführen des Saumes und des Stabes in eine rohrförmige starre, gekrümmte Zugstange (5), die einen seitlichen Spalt hat, durch den hindurch sich der Stoff erstreckt.

## Claims

1. A roller blind for a motor vehicle comprising a housing (1) having a guide slot (2) through which extends a strip of flexible fabric (3) having one end attached to a straight roller member (4) disposed within the housing and one end extending to the outside the housing and fixed to a pull bar (5) provided with hanging means, characterized in that the guide slot (2) and the pull bar (5) have substantially similar curvatures and in that the hanging means (6) are attached to the pull bar at an angle with respect to the fabric (3) so as to permit the pull bar (5) in its hung position to show a camber in two different planes and thus match with a good approximation the upper edge of a window curved in two different planes.

2. A blind as set forth in claim 1 characterized in that the end of the fabric fixed to the pull bar (5) comprises a curved cut line (7) having a camber substantially equal to the camber of the pull bar, and is attached to a rod member (8) engaged in a tubular pull bar.

3. A process for fixing a fabric to a pull bar to provide a roller blind as set forth in claim 2, characterized in that it comprises the steps of providing at one end of the fabric a cut line (7) having a curved edge with a camber which is substantially equal to the camber of the pull bar, arranging a flexible rod member (8) in a shaping means so that it is in a curved configuration with a camber substantially equal to the camber of the pull bar, fixing the fabric to the flexible rod member in tangential relationship therewith along the curved edge of the cut line of the fabric, and engaging the flexible rod member and the end of the fabric fixed thereto into a rigid curved tubular pull bar (5) having a lateral opening (11) through which the fabric extends.

4. A process as set forth in claim 3 wherein the flexible rod member and the fabric are made of polyvinyl chloride and the fabric is fixed to the rod member by ultrasonic welding.

5. A roller blind according to claim 1 characterized in that the end of the fabric fixed to the pull bar comprises a hem having a straight edge and a curved fold having a camber substantially equal to the camber of the pull bar, and in that a rod member (8) is disposed within the hem, the rod member and the fold being engaged in the pull bar (5).

6.  A process for fixing a fabric to a pull bar to provide a roller blind as set forth in claim 5, characterized in that it comprises the steps of providing at one end of the fabric a cut line (7) having a curved edge with a camber which is substantially double the camber of the pull bar, folding the fabric over on to itself by means of a shaping member (14) comprising a curved edge (15) with a camber which is substantially equal to the camber of the pull bar, fixing two oppositely disposed thicknesses of fabric together in the vinicity of the edge with the cut line, engaging a rod member (8) into the hem and engaging the hem and the rod member into a rigid curved tubular pull bar (5) having a lateral slot through which the fabric extends.

Fig:1

Fig:2

Fig. 4

Fig. 3

Fig. 5

Fig. 6